(19) Europäisches Patentamt / European Patent Office / Office européen des brevets

(11) **EP 3 496 026 A1**

(12) **EUROPEAN PATENT APPLICATION**

(43) Date of publication:
**12.06.2019 Bulletin 2019/24**

(51) Int Cl.:
*G06Q 40/02* (2012.01)   *G06Q 40/00* (2012.01)

(21) Application number: **18208257.8**

(22) Date of filing: **26.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2017   JP 2017236851**

(71) Applicant: **FUJITSU LIMITED**
**Kanagawa 211-8588 (JP)**

(72) Inventor: **Washio, Suguru**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **GENERATION PROGRAM, INFORMATION PROCESSING APPARATUS AND GENERATION METHOD**

(57)   A method for generating input values to a neural network is disclosed. The method includes: classifying, when a document is accepted, each of a plurality of items included in the accepted document into one of a plurality of groups by referring to a storage in which information indicative of a relationship between the plurality of items included in the document is stored; and generating, for each of the plurality of groups, the input values to the neural network based on a value or values individually associated with one or more items classified in the group.

F I G . 1

**Description**

FIELD

The embodiment discussed herein relates to a generation program, an information processing apparatus and a generation method.

BACKGROUND

In recent years, in order to make it possible to smoothly distribute financial information of financial statements and so forth, an extensible business reporting language (XBRL) document (hereinafter referred to also as document) for which XBRL that is a language based on the standard of extensible markup language (XML) is used is generated.

This XBRL document is constituted from a concept of an instance and a taxonomy, and all financial information to be disclosed is set as instances and taxonomies. In an XBRL document, for example, financial information itself (hereinafter referred to also as item) such as amounts of sales or operating profits is set as an instance, and a definition element such as a display structure or a display method is set as taxonomy (for example, refer to Japanese Laid-open Patent Publication No. 2007-164591, Japanese Laid-open Patent Publication No. 2010-170287 and Japanese Laid-open Patent Publication No. 2017-084340).

A person in charge who is to perform information analysis of such financial information as described above (such person is hereafter referred to also merely as analyzer) performs various information analyses using a neural network (for example, a forward propagation type neural network) that has learned, for example, training data including instances and taxonomies. For example, the analyzer performs prediction of future operating conditions and stock prices of a company using a neural network that has learned training data including input data constituted from information included in instances and taxonomies and output data constituted from information indicative of operating conditions, stock prices and so forth of the company in the past.

Here, for example, in the case where the number of input nodes of the neural network is fixed and the number of kinds of information included in the instances or taxonomies is greater than the number of the input nodes of the neural network, the analyzer causes the neural network to perform learning of training data, for example, by performing inputting to the neural network after part of the information included in the instances or the taxonomies is deleted.

However, a plurality of pieces of information having no relationship to each other are sometimes included in an adjacent relationship to each other in an instance or a taxonomy. Therefore, in this case, it is difficult for the analyzer to perform extraction of feature values by application of various filters with high accuracy and to input an appropriate input value to the neural network. Accordingly, it is sometimes difficult for the analyzer to construct a neural network that can output information having high significance.

Therefore, it is desirable to provide a generation program, an information processing apparatus and a generation method that make it possible to construct a neural network that can output information having high significance.

SUMMARY

According to an aspect of the embodiments, a generation method performed in a computer includes: classifying, when a document is accepted, each of a plurality of items included in the accepted document into one of a plurality of groups by referring to a storage in which information indicative of a relationship between the plurality of items included in the document is stored; and generating, for each of the plurality of groups, input values to a neural network based on a value or values individually associated with one or more items classified in the group.

RESULT OF INVENTION

According to an aspect, it is made possible to construct a neural network that may output information having high significance.

BRIEF DESCRIPTION OF DRAWINGS

FIG. 1 depicts a configuration of an information processing system;
FIGs. 2 to 7 depict particular examples of document information;
FIG. 8 depicts a hardware configuration of an information processing apparatus;
FIG. 9 depicts functional blocks of an information processing apparatus;

FIG. 10 depicts a flow chart illustrating an outline of an information generation process according to a first embodiment;

FIGs. 11 to 13 depict an outline of the information generation process according to the first embodiment;

FIGs. 14 to 17 depict flow charts illustrating details of the information generation process according to the first embodiment;

FIG. 18 depicts a particular example of first item information;

FIG. 19 depicts a particular example of first taxonomy information;

FIG. 20 depicts a particular example of neural network (NN) information;

FIG. 21 depicts a particular example of setting information;

FIG. 22 depicts a particular example of filter information;

FIGs. 23 and 24 depict details of the information generation process according to the first embodiment;

FIG. 25 depicts another particular example of filter information;

FIG. 26 depicts a particular example of second item information;

FIG. 27 depicts a particular example of second taxonomy information;

FIGs. 28 and 29 depict details of another information generation process according to the first embodiment; and

FIG. 30 depicts a further example of filter information.

## DESCRIPTION OF EMBODIMENTS

[Configuration of Information Processing System]

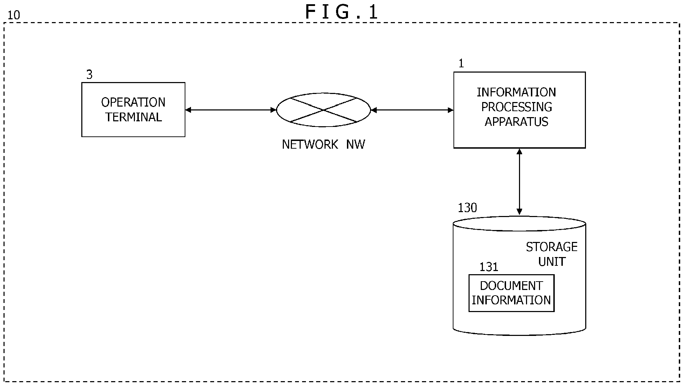

FIG. 1 depicts a configuration of an information processing system. The information processing system 10 depicted in FIG. 1 includes, for example, an information processing apparatus 1, a storage unit 130 and an operation terminal 3. The operation terminal 3 depicted in FIG. 1 is coupled to the information processing apparatus 1 through a network NW such as the Internet.

The operation terminal 3 is a terminal that is used, for example, by an analyzer. For example, the analyzer inputs an XBRL document 131 (hereinafter referred to also as document information 131) constituted from instances and taxonomies through the operation terminal 3.

The information processing apparatus 1 stores the document information 131 inputted from the operation terminal 3 into the storage unit 130. For example, the information processing apparatus 1 stores the document information 131 of each reporting year in a sorted state into the storage unit 130.

Further, the information processing apparatus 1 causes, for example, a neural network (not depicted) constructed in advance to learn the document information 131 stored in the storage unit 130. The analyzer performs various information analyses, for example, using the neural network that has learned the document information 131. For example, the analyzer performs prediction of future operating conditions and stock prices of companies using a neural network that has learned training data including input data constituted from information included in instances and taxonomies included in the document information 131 and output data constituted from information indicative of operating conditions, stock prices and so forth of the companies in the past. In the following, a particular example of the document information 131 is described.

[Particular Example of Document Information]

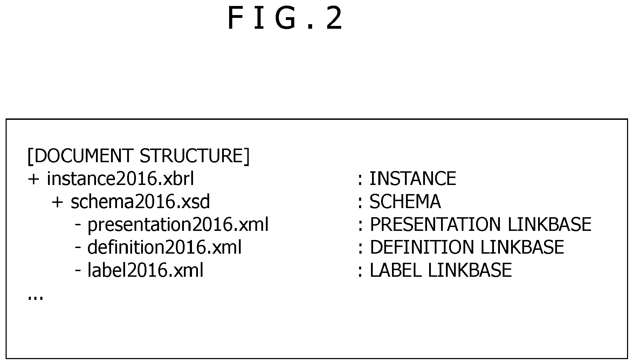

FIGs. 2 to 7 are views illustrating particular examples of document information. The document information here may be the document information 131 depicted in FIG. 1. It is to be noted that the following description is given assuming that first document information 131a and second document information 131b (that is document information 131 corresponding to a reporting year newer than that of the first document information 131a) are stored in the storage unit 130. Further, the following description is given assuming that a taxonomy constituting the first document information 131a and the second document information 131b includes a schema, a presentation linkbase, a definition linkbase and a label linkbase.

[Particular Example of Document Structure in Document Information]

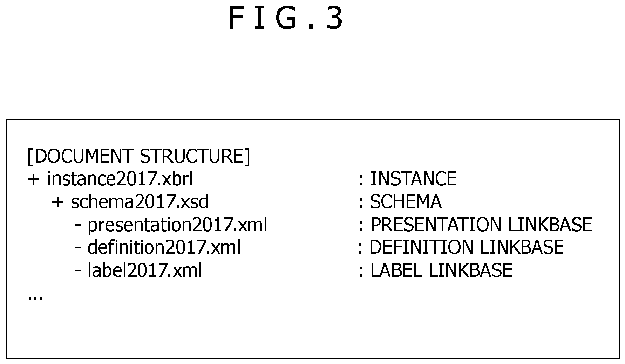

First, particular examples of a document structure in the document information 131 are described. FIG. 2 is a view illustrating a particular example of a document structure in the first document information 131a, and FIG. 3 is a view illustrating a particular example of a document structure in the second document information 131b.

The document structure of the first document information 131a depicted in FIG. 2 indicates that a file corresponding to an instance (file whose file name is "instance2016.xbrl") is a file that is referred to from a file corresponding to a schema (a file whose file name is "schema2016.xsd").

Further, the document structure of the first document information 131a depicted in FIG. 2 indicates that a file corresponding to the schema is a file that is referred to from a file corresponding to the presentation linkbase (file whose file name is "presentation2016.xml"), a file corresponding to the definition linkbase (file whose file name is "definition2016.xml") and a file corresponding to the label linkbase (file whose file name is "label2016.xml").

Meanwhile, the document structure of the second document information 131b depicted in FIG. 3 indicates that a file corresponding to the instance (file whose file name is "instance2017.xbrl") is a file that is referred to from a file corresponding to the schema (file whose file name is "schema2017.xsd").

Further, the document structure of the second document information 131b depicted in FIG. 3 indicates that a file corresponding to the schema is a file that is referred to from a file corresponding to the presentation linkbase (file whose file name is "presentation2017.xml"), a file corresponding to the definition linkbase (file whose file name is "definition2017.xml") and a file corresponding to the label linkbase (file whose file name is "label2017.xml").

[Particular Example of Instance Constituting Document Information]

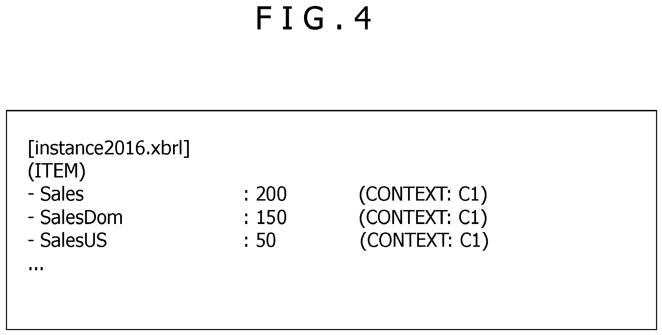

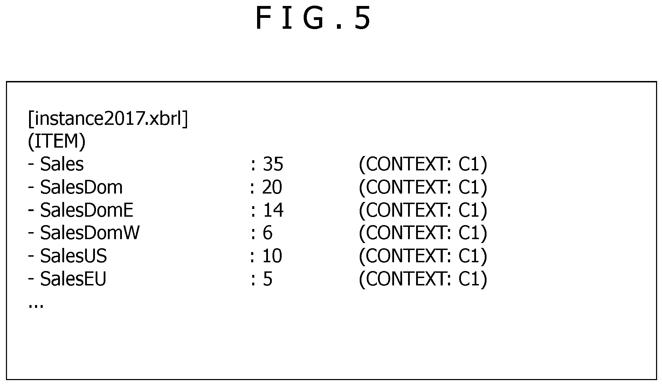

Now, a particular example of an instance constituting the document information 131 is described. FIG. 4 is a view depicting a particular example of a file corresponding to an instance that configures the first document information 131a and FIG. 5 is a view depicting a particular example of a file corresponding to an instance that constituting the second document information 131b.

The instance depicted in FIG. 4 includes information indicating that the item values of "Sales," "SalesDom" and "SalesUS" that are items for referring to a context (information indicative of company information, a reporting year and so forth) whose context identification (ID) is "C1" are "200," "150" and "50," respectively.

Meanwhile, the instance depicted in FIG. 5 includes information indicating that the item values of "Sales," "SalesDom," "SalesDomE," "SalesDomW," "SalesUS" and "SalesEU" that are items that refer to a context shoes context ID is "C1" are "35," "20," "14," "6," "10" and "5," respectively.

[Particular Example of Taxonomy constituting Document Information]

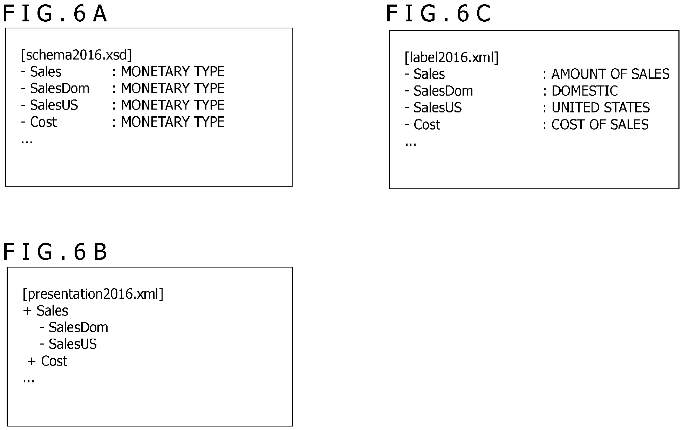

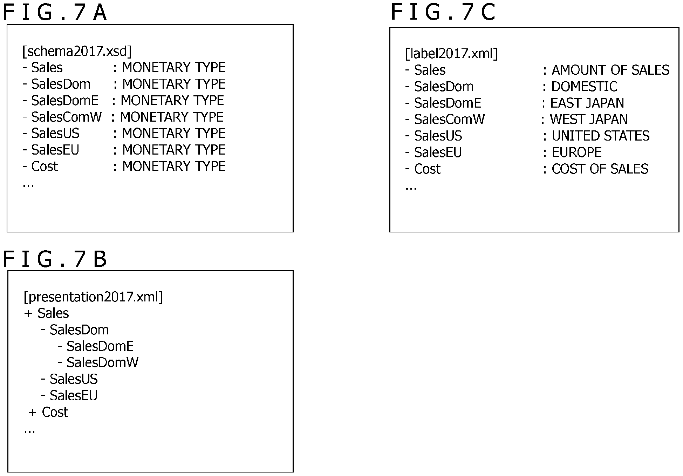

Now, a particular example of a taxonomy constituting the document information 131 is described. FIGs. 6A to 6C are views illustrating particular examples of a file corresponding to a taxonomy constituting the first document information 131a. FIG. 6A depicts a particular example of a file corresponding to the schema; FIG. 6B depicts a particular example of a file corresponding to the presentation linkbase; and FIG. 6C depicts a particular example of a file corresponding to the label linkbase. Meanwhile, FIGs. 7A to 7C are views illustrating particular examples of a taxonomy constituting the second document information 131b. FIG. 7A depicts a particular example of a file corresponding to the schema; FIG. 7B depicts a particular example of a file corresponding to the presentation linkbase; and FIG. 7C depicts a particular example of a file corresponding to the label linkbase. It is to be noted that, in the following description, description of a particular example of a file corresponding to the definition linkbase is omitted.

The schema depicted in FIG. 6A includes information that defines, for example, "Sales," "SalesDom," "SalesUS" and "Cost" as items of the monetary type. Meanwhile, the presentation linkbase depicted in FIG. 6B includes information indicating that, for example, "Sales," "SalesDom" and "SalesUS" constitute a hierarchical structure and "Sales" is a parent item (item included in an upper hierarchy) of "SalesDom" and "SalesUS." Further, the presentation linkbase depicted in FIG. 6B includes information indicating that, for example, a hierarchical structure including "Cost" is not formed. Furthermore, the label linkbase depicted in FIG. 6C includes information indicating that the labels corresponding to, for example, "Sales," "SalesDom," "SalesUS" and "Cost" are "amount of sales," "domestic," "United States" and "cost of sales," respectively.

Further, the schema depicted in FIG. 7A includes information that defines, for example, "Sales," "SalesDom," "SalesDomE," "SalesDomW," "SalesUS," "SalesEU" and "Cost" as items of the monetary type. Further, the presentation linkbase depicted in FIG. 7B includes information indicating that, for example, "Sales," "SalesDom," "SalesUS," "SalesEU," "SalesDomE" and "SalesDomW" constitute a hierarchical structure and "Sales" is a parent item of "SalesDom," "SalesUS" and "SalesEU" and "SalesDom" is a parent item of "SalesDomE" and "SalesDomW." Further, the presentation linkbase depicted in FIG. 7B includes information that, for example, a hierarchical structure including "Cost" is not formed. Furthermore, the label linkbase depicted in FIG. 7C includes information indicating that, for example, the labels corresponding to "Sales," "SalesDom," "SalesDomE," "SalesDomW," "SalesUS," "SalesEU" and "Cost" are "amount of sales," "domestic," "East Japan," "West Japan," "United States," "Europe" and "cost of sales," respectively.

Here, in the case where the number of input nodes of a neural network stored in the storage unit 130 is fixed and the number of pieces of information included in an instance or a taxonomy included in the document information 131 is greater than the number of the input nodes of the neural network, the analyzer performs generation of an input value to the neural network, for example, by deleting part of information included in an instance or a taxonomy included in the document information 131.

However, a plurality of pieces of information having no relationship to each other is sometimes included in an adjacent relationship to each other in an instance or a taxonomy. Therefore, in this case, it is difficult for the analyzer to perform extraction of feature values by application of various filters with high accuracy and to input an appropriate input value to the neural network. Accordingly, it is sometimes difficult for the analyzer to perform construction of a neural network that can output information of high significance.

Therefore, if the information processing apparatus 1 in the present embodiment accepts document information 131 (hereinafter referred to merely also as document 131), it refers to the storage unit 130 in which information indicative of a relationship between a plurality of items included in the document information 131 is stored. Then, the information processing apparatus 1 classifies each of a plurality of items included in the accepted document information 131 into one of a plurality of groups.

Thereafter, the information processing apparatus 1 executes, for each of the plurality of groups, a process for generating an input value to the neural network from values individually associated with one or more items classified in the group.

For example, the information processing apparatus 1 classifies items included in an instance or a taxonomy into groups each from items having a given relationship to each other. Then, the information processing apparatus 1 generates, for each of the values associated with the items included in the classified groups, an input value to the neural network by performing product sum operation and so forth by application of desirable filters.

Consequently, when the information processing apparatus 1 generates an input value to the neural network, it is possible to suppress product sum operation or the like to be performed for values that are associated with items that have no relationship to each other. Therefore, the information processing apparatus 1 may input an appropriate input value to the neural network and may construct a neural network that is effective to perform information analysis.

[Hardware Configuration of Information Processing Apparatus]

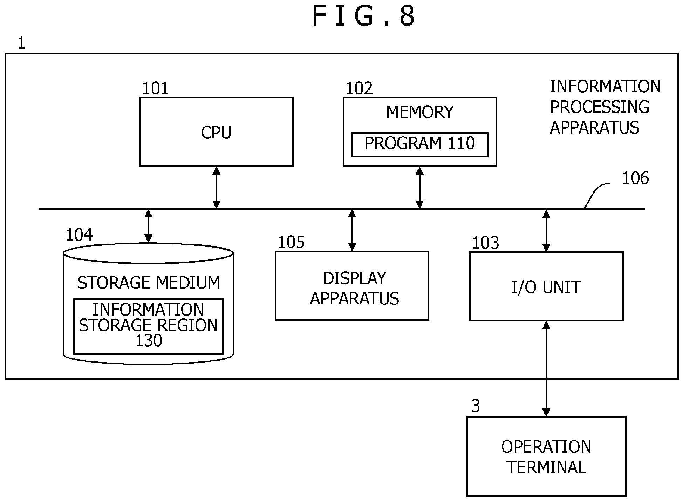

Now, a hardware configuration of an information processing apparatus is described. FIG. 8 is a view depicting a hardware configuration of an information processing apparatus. The information processing apparatus here may be the information processing apparatus 1 depicted in FIG. 1.

As depicted in FIG. 8, the information processing apparatus 1 includes a central processing unit (CPU) 101 that is a processor, a memory 102, an external interface (hereinafter referred to also as input/output (I/O) unit) 103, a storage medium 104, and a display apparatus 105 that displays various kinds of information. The components mentioned of the information processing apparatus 1 are coupled to each other by a bus 106.

The storage medium 104 stores a program 110 for performing a process for generating an input value to the neural network (such process is hereinafter referred to also as information generation process), for example, in a program storage region (not depicted) in the storage medium 104. The storage medium 104 may be, for example, a hard disk drive (HDD).

Further, the storage medium 104 includes, for example, a storage unit 130 (also referred to as information storage region 130) that stores information to be used when an information generation process is performed. The CPU 101 executes the program 110 loaded into the memory 102 from the storage medium 104 to perform an information generation process. The I/O unit 103 performs communication, for example, with the operation terminal 3.

[Function of Information Processing Apparatus]

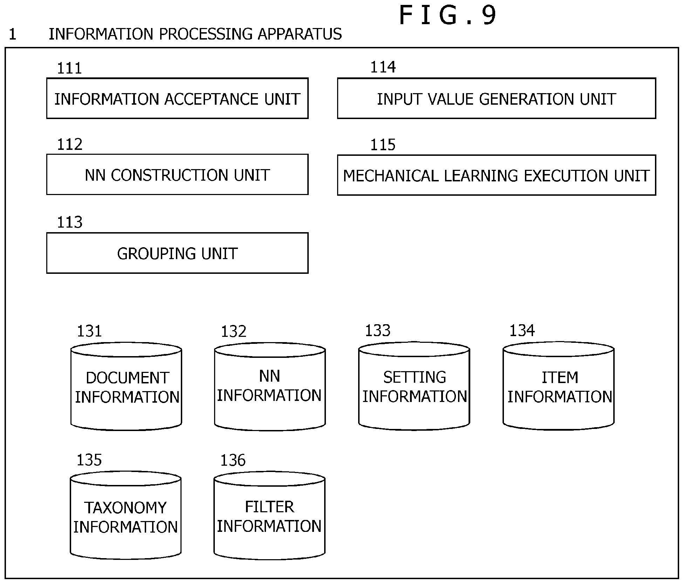

Now, functions of an information processing apparatus are described. FIG. 9 is a block diagram of functions of an information processing apparatus. The information processing apparatus here may be the information processing apparatus 1 depicted in FIG. 1.

The information processing apparatus 1 implements, by organic cooperation of hardware such as the CPU 101 and memory 102 with the program 110, various functions including an information acceptance unit 111, an NN construction unit 112, a grouping unit 113, an input value generation unit 114 and a machine learning execution unit 115 as depicted in FIG. 9

Further, in the information storage region 130 described with reference to FIG. 8 and so forth, for example, document information 131, NN information 132, setting information 133, item information 134, taxonomy information 135 and filter information 136 are stored.

The information acceptance unit 111 accepts, for example, document information 131 inputted from the operation terminal 3. Then, the information acceptance unit 111 stores the accepted document information 131 into the information storage region 130.

Further, the information acceptance unit 111 generates, from items included in an instance constituting the document information 131, item information 134 that is information that associates information that specifies the items and contexts relating to values of the items with each other. Further, the information acceptance unit 111 generates, from taxonomies constituting the document information 131, taxonomy information 135 indicative of information included in each taxonomy (information including a relationship between the items). Then, the information acceptance unit 111 stores the generated item information 134 and taxonomy information 135 into the information storage region 130. A particular example of the item information 134 and the taxonomy information 135 is hereinafter described.

The NN construction unit 112 constructs a neural network of an arbitrary structure. For example, the NN construction unit 112 performs generation of a program that functions as a neural network.

If the information acceptance unit 111 accepts document information 131, the grouping unit 113 refers to the taxonomy information 135, for example, stored in the information storage region 130 and classifies each of a plurality of items included in the document information 131 accepted by the information acceptance unit 111 into one of a plurality of groups.

The input value generation unit 114 executes, for each of the plurality of groups classified by the grouping unit 113, a process for referring to the item information 134, for example, stored in the information storage region 130 to generate an input value to the neural network constructed by the NN construction unit 112 from values individually associated with one or more items classified in the group.

For example, the input value generation unit 114 refers to the setting information 133 stored in the information storage region 130 and generates filters to be applied individually to the one or more items classified in each group. The setting information 133 is information including the number of filters to be applied to each item, an expression to be performed by each filter and so forth. Then, the input value generation unit 114 generates values, which are outputted in the case where the values individually associated with the one or more items classified in each group are inputted to the filters, as input values to the neural network.

The machine learning execution unit 115 causes the neural network constructed by the NN construction unit 112 to learn training data (not depicted) including the instances and taxonomies constituting the document information 131 stored in the information storage region 130. It is to be noted that the NN information 132 and the filter information 136 are hereinafter described.

[Outline of First Embodiment]

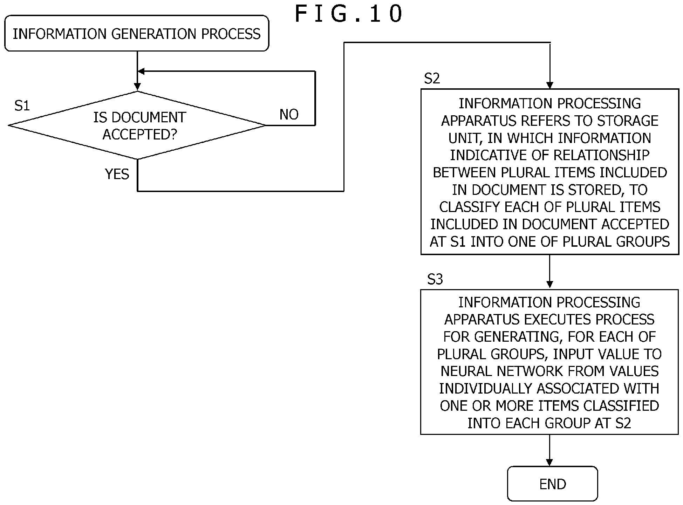

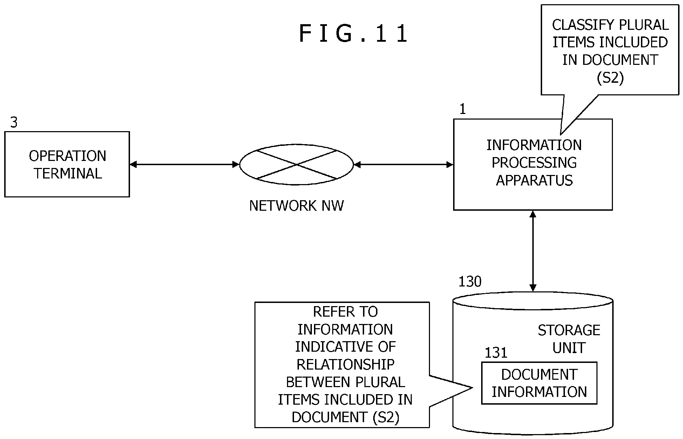

Now, an outline of a first embodiment is described. FIG. 10 is a flow chart illustrating an outline of an information generation process according to the first embodiment. Further, FIGs. 11 to 13 are views illustrating an outline of the information generation process according to the first embodiment. An outline of the information generation process depicted in FIG. 10 is described with reference to FIGs. 11 to 13.

As depicted in FIG. 10, the information processing apparatus 1 waits until it accepts document information 131 (NO at S1). For example, the information processing apparatus 1 waits until document information 131 inputted through the operation terminal 3 is accepted.

In the case where document information 131 is accepted (YES at S1), the information processing apparatus 1 refers to the information storage region 130, in which information (taxonomy information 135) indicative of a relationship between a plurality of items included in the accepted document information 131 is stored, and classifies each of a plurality of items included in the accepted document information 131 into one of a plurality of groups as depicted in FIG. 11 (S2).

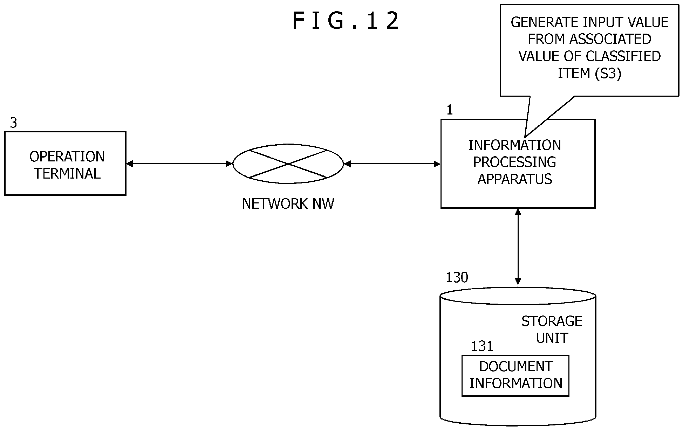

Thereafter, the information processing apparatus 1 executes a process for generating, for each of the plurality of groups, an input value to the neural network from the values individually associated with the one or more items classified in the group by the process at S2 as depicted in FIG. 12 (S3). In the following, a particular example of S2 and S3 is described.

[Particular Example of S2 and S3]

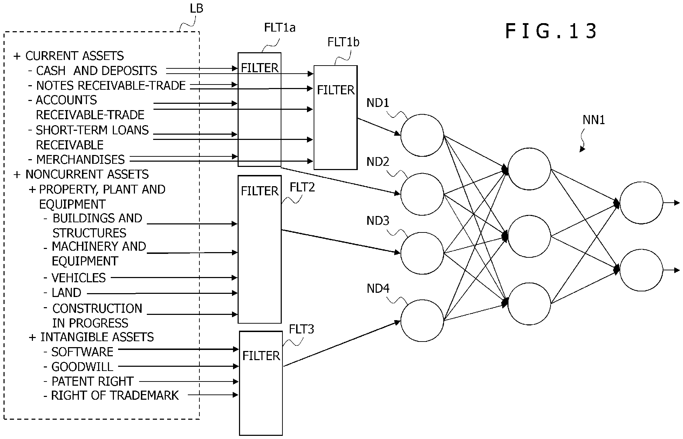

FIG. 13 is a view illustrating a particular example of S2 and S3. The items included in a label group LB in FIG. 13 are labels corresponding to part of items included, for example, in an instance constituting the document information 131 (labels defined in the label link included in the taxonomies).

For example, the label group LB depicted in FIG. 13 indicates that the parent item of "cash and deposits," "notes receivable-trade," "accounts receivable-trade," "short-term loans receivable" and "merchandises" is "current assets," and the parent item of "property, plant and equipment" and "intangible assets" is "noncurrent assets." Further, the label group LB depicted in FIG. 13 indicates that the parent item of "buildings and structures," "machinery and equipment," "vehicles," "land" and "construction in progress" is "property, plant and equipment" and the parent item of "software," "goodwill," "patent right" and "right of trademark" is "intangible assets."

Then, the information processing apparatus 1 classifies each item included, for example, in the label group LB depicted in FIG. 13 into a group for each child item corresponding to the same parent item (S2).

For example, the information processing apparatus 1 generates a group including "cash and deposits," "notes receivable-trade," "accounts receivable-trade," "short-term loans receivable" and "merchandises" that are child items of "current assets" (the group is hereinafter referred to as group A) and another group including "buildings and structures," "machinery and equipment," "vehicles," "land" and "construction in progress" that are child items of "property, plant and equipment" (the group is hereinafter referred to as group B). Further, the information processing apparatus 1 generates a further group that includes "software," "goodwill," "patent right" and "right of trademark" that are child items of "intangible assets" (the group is hereinafter referred to as group C).

Then, the information processing apparatus 1 generates a filter FLT1a and a filter FLT1b as filters to be applied to the items included in the group A, for example, as depicted in FIG 13. Further, the information processing apparatus 1 generates, for example, a filter FLT2 as a filter to be applied to the items included in the group B. Furthermore, the information processing apparatus 1 generates, for example, a filter FLT3 as a filter to be applied to the items included in the group C. For example, the information processing apparatus 1 refers to the setting information 133 stored in advance in the information storage region 130 to perform generation of such filters.

Then, the information processing apparatus 1 generates values, which are outputted when values of the items are individually inputted to the filters FLT1a, FLT1b, FLT2 and FLT3 as input values to the input nodes ND1, ND2, ND3 and ND4 of a neural network NN1 as depicted in FIG. 13 (S3).

Thereafter, the information processing apparatus 1 inputs the generated input values to the nodes ND1, ND2, ND3 and ND4. Then, the information processing apparatus 1 performs machine learning by comparing the values outputted from the neural network in response to inputting of the input values and the training data (not depicted) stored in the information storage region 130.

For example, the information processing apparatus 1 classifies items included in instances and taxonomies into groups each constituted from items having a given relationship to each other (for example, items whose parent items are same). Then, the information processing apparatus 1 performs, for each value associated with an item included in a classified group, product sum operation or the like by application of a desirable filter to generate an input value to the neural network.

Consequently, when the information processing apparatus 1 generates an input value to the neural network, it is possible to suppress performance of product sum operation and so forth for values associated with items having no relationship to each other (for example, values individually associated with "merchandises" and "noncurrent assets" in FIG. 13). Therefore, it becomes possible for the information processing apparatus 1 to input an appropriate input value to the neural network and becomes possible to perform construction of a neural network that is effective to perform information analysis.

[Details of First Embodiment]

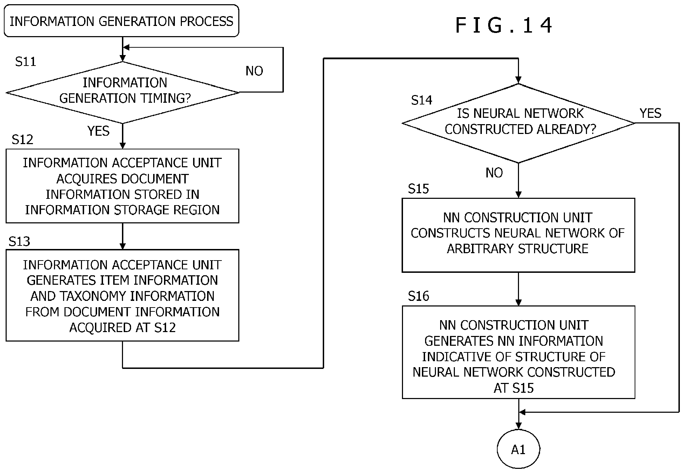

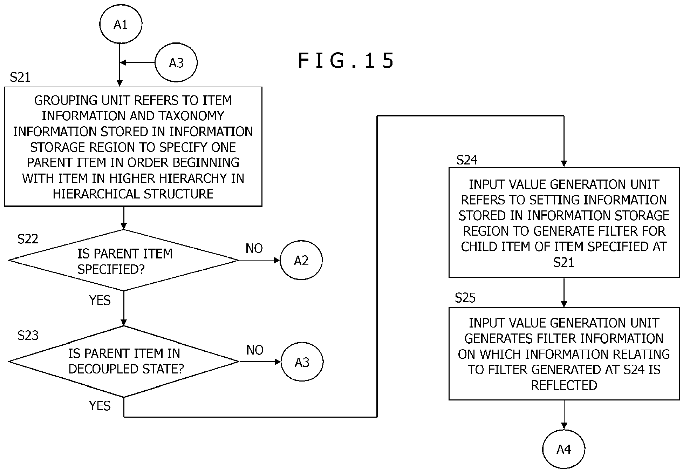

Now, details of the first embodiment are described. FIGs. 14 to 17 are flow charts illustrating details of the information generation process in the first embodiment. Further, FIGs. 15 to 30 are views illustrating details of the information generation process in the first embodiment. Details of the information generation process of FIGs. 14 to 17 are described with reference to FIGs. 15 to 30. It is to be noted that, in the following description, "item name" and "label" are collectively referred to as "item name (label)." For example, "Sales" and "amount sold" that is the label of "Sales" are collectively referred to also as "Sales (amount sold)."

[Process Where Input Value Is Generated from First Document Information]

First, the information generation process in the case where an input value to the neural network is generated from information included in the first document information 131a described with reference to FIG. 2 and so forth.

The information acceptance unit 111 of the information processing apparatus 1 waits till an information generation timing as depicted in FIG. 14 (NO at S11). The information generation timing may be, for example, a timing at which inputting that an information generation process is to be performed is performed through the operation terminal 3.

When the information generation timing comes (YES at S11), the information acceptance unit 111 acquires the first document information 131a stored in the information storage region 130 (S12).

Then, the information acceptance unit 111 generates first item information 134a and first taxonomy information 135a from the first document information 131a acquired by the process at S12 (S13). Then, the information acceptance unit 111 stores the generated first item information 134a and first taxonomy information 135a into the information storage region 130. In the following, a particular example of the first item information 134a and the first taxonomy information 135a is described.

[Particular Example of First Item Information]

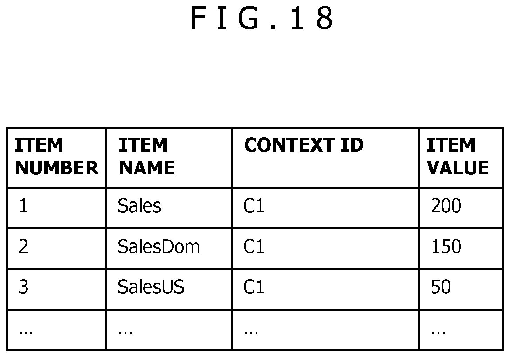

First, a particular example of the first item information 134a is described. FIG. 18 is a view illustrating a particular example of the first item information 134a.

The first item information 134a depicted in FIG. 18 includes "item number" for identifying each piece of information included in the first item information 134a, "item name" to which an item name is set, "context ID" to which a context ID corresponding to a context referred to by an item having an item name set in "item name," and "item value" to which an item value corresponding to an item having an item name set in "item name" is set.

For example, the instance described with reference to FIG. 4 includes information indicating that the item value of "Sales" that is an item that refers to a context whose context ID is "C1" is "200." Therefore, the information acceptance unit 111 sets "Sales" as "item name" of information whose "item number" is "1," sets "C1" as "context ID" and sets "200" as "item value" as depicted in FIG. 18. Description of the other information included n FIG. 18 is omitted.

[Particular Example of First Taxonomy Information]

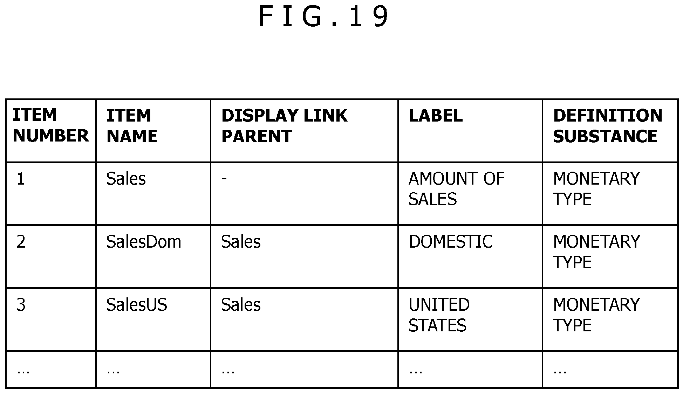

Now, particular information of the first taxonomy information 135a is described. FIG. 19 is a view illustrating a particular example of the first taxonomy information 135a.

The first taxonomy information 135a depicted in FIG. 19 includes "item number" for identifying each piece of information included in the first taxonomy information 135a and "item name" to which an item name is set. The first taxonomy information 135a depicted in FIG. 19 further includes "presentation link parent" to which an item name corresponding to a parent item of an item having an item name set in "item name" from within information included in the presentation linkbase is set and "label" to which a label of an item having an item name set in "item name" from within information included in the label linkbase is set. Furthermore, the first taxonomy information 135a depicted in FIG. 19 includes "definition substance" to which the definition substance of an item having an item name set to "item name" from within information included in the schema is set. It is to be noted that, in the case where a taxonomy constituting the first document information 131a includes a different linkbase (for example, a calculation linkbase, a reference linkbase or the like), the information acceptance unit 111 may include information included in the different linkbase into the first taxonomy information 135a.

For example, the schema described with reference to FIG. 6A includes information that defines "Sales" as an item of the monetary type, and the label linkbase described with reference to FIG. 6C includes information indicating that the label corresponding to "Sales" is "amount of sales." Therefore, the information acceptance unit 111 sets "Sales" as "item name" of the information whose "item number" is "1," sets "amount of sales" as "label" and sets "monetary type" as "definition substance" as depicted in FIG. 19. Then, the information acceptance unit 111 sets "-" indicating that information is not set as "presentation link parent" of the information whose "item number" is "1" as depicted in FIG. 19.

Meanwhile, the schema described with reference to FIG. 6A includes information that defines "SalesDom" as an item of the monetary type, and the presentation linkbase described with reference to FIG. 6B includes information indicating that "Sales" is a parent item of "SalesDom." Further, the label linkbase described with reference to FIG. 6C includes information indicating that the label corresponding to "SalesDom" is "domestic." Therefore, as depicted in FIG. 19, the information acceptance unit 111 sets "SalesDom" as "item name" of the information whose "item number" is "2," sets "Sales" as "presentation link parent," sets "domestic" as "label," and sets "monetary type" as "definition substance" as depicted in FIG. 19.

Referring back to FIG. 14, the NN construction unit 112 of the information processing apparatus 1 decides whether or not a neural network of an arbitrary structure is constructed already (S14).

In the case where it is decided that a neural network is not constructed as yet (NO at S14), the NN construction unit 112 constructs a neural network of an arbitrary structure (S15). For example, the NN construction unit 112 may refer to a specific taxonomy (hereinafter referred to also as base taxonomy) stored in advance in the information storage region 130 to perform construction of a neural network corresponding to the structure of the base taxonomy. Alternatively, the NN construction unit 112 may refer to a plurality of taxonomies stored in advance, for example, in the information storage region 130 to perform construction of a neural network based on information included in common in the plurality of taxonomies.

Then, the NN construction unit 112 generates, in response to the construction of a neural network by the process at S15, NN information 132 indicative of the structure of the neural network constructed by the process at S15 (S16). Then, the NN construction unit 112 stores the generated NN information 132 into the information storage region 130.

On the other hand, in the case where it is decided that a neural network is constructed already (YES at S14), the NN construction unit 112 does not perform any of the processes at S15 and S16. In the following, a particular example of the NN information 132 is described.

[Particular Example of NN Information]

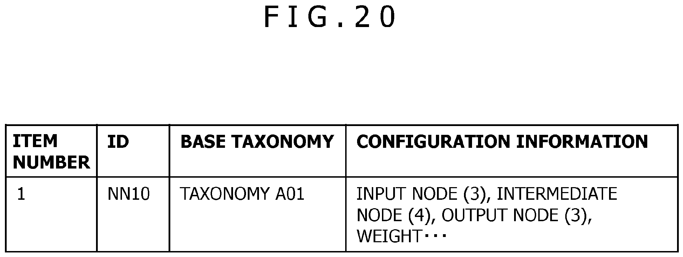

FIG. 20 is a view illustrating a particular example of the NN information 132. The NN information 132 depicted in FIG. 20 includes, as items, "item number" for identifying each piece of information included in the NN information 132, "ID" for identifying each neural network, "base taxonomy" for identifying a base taxonomy to be referred to upon construction of each neural network, and "configuration information" to which information indicative of a configuration of each neural network is set.

For example, in the NN information 132 depicted in FIG. 20, "NN10" is set as "ID" and "taxonomy A01" is set as "base taxonomy" to the information whose "item number" is "1." Further, in the NN information 132 depicted in FIG. 20, to the information whose "item number" is "1," the numbers of input nodes, intermediate nodes and output nodes ("3," "4" and "3," respectively) and values indicative of weights between the nodes of the neural network whose "ID" is "NN10" are set as "configuration information."

Referring back to FIG. 15, the grouping unit 113 of the information processing apparatus 1 refers to the first item information 134a and the first taxonomy information 135a stored in the information storage region 130 and specifies one parent item for each item in order from an item whose hierarchy in the hierarchical structure is higher (S21).

For example, in the first taxonomy information 135a described with reference to FIG. 19, "Sales" is set in "presentation link parent" of information whose "item name" is "SalesDom" (information whose "item number" is "2"). Further, in the first taxonomy information 135a described with reference to FIG. 19, "Sales" is set in "presentation link parent" of information whose "item name" is "SalesUS" (information whose "item number" is "3"). Therefore, the grouping unit 113 specifies, in the process at step S21, "Sales" from within the information set in "item name" of the first item information 134a described with reference to FIG. 18 as a parent item.

Then, the grouping unit 113 decides whether or not a parent item is specified by the process at step S21 (S22).

In the case where it is decided by the process at S21 that a parent item is specified (YES at S22), the grouping unit 113 decides whether or not the parent item specified by the process at S21 is in a decoupled state from the neural network constructed by the process at S15 (S23).

In the case where the parent item specified by the process at S21 is in a decoupled state from the neural network constructed by the process at S15 (YES at S23), the input value generation unit 114 of the information processing apparatus 1 refers to the setting information 133 stored in the information storage region 130 and generates a filter for child items of the item specified by the process at S21 (S24). In the following, a particular example of the setting information 133 is described.

[Particular Example of Setting Information]

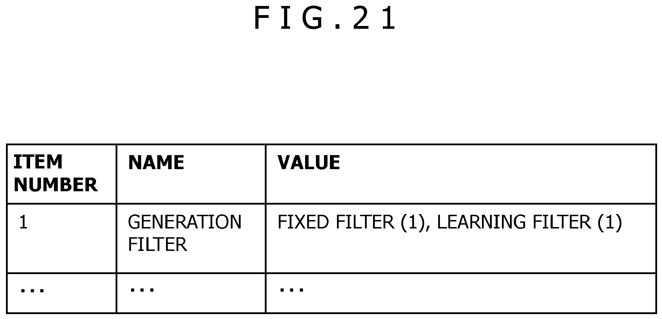

FIG. 21 is a view illustrating a particular example of setting information. The setting information 133 depicted in FIG. 21 includes "item number" for identifying each piece of information included in the setting information 133, "name" to which a name of each piece of information is set, and "value" to which a value of each piece of information is set.

For example, in the setting information 133 depicted in FIG. 21, to the information whose "item number" is "1," "generation filter" is set as "name." Further, in the setting information 133 depicted in FIG. 21, to the information whose "item number" is "1," "fixed filter (1), learning filter (1)" indicating that one fixed filter and one learning filter are to be generated is set as "value."

Therefore, for example, in the case where the parent item specified by the process at S21 is "Sales" and "Sales" is in a decoupled state from the neural network, the input value generation unit 114 refers to the setting information 133 stored in the information storage region 130 and generates a fixed filter and a learning filter for "SalesDom" and "SalesUS," respectively, which are child items of "Sales" (YES at S22, YES at S23 and S24). In the following, a particular example of an expression used for a filter is described.

[Particular Example of Expression Used for Filter]

The input value generation unit 114 generates a fixed filter that performs arithmetic operation, for example, in accordance with one of expressions 1 to 4 given below. For example, the expression 1 given below is an expression for calculating the total of values of child items of "Sales" as an output value, and the expression 2 given below is an expression for calculating the ratio of the value of "SalesDom" to the total of the values of the child items of "Sales" as an output value. Further, the expression 3 given below is an expression for calculating an average of the values of child items of "Sales" as an output value, and the expression 4 given below is an expression for calculating a variance of the values of the child items of "Sales" as an output value.

$$\text{Output value} = \text{SalesDom} + \text{SalesUS} \ldots \text{(expression 1)}$$

$$\text{Output value} = \text{SalesDom} \times 100/(\text{SalesDom} + \text{SalesUS}) \ldots \text{(expression 2)}$$

$$\text{Output value} = (\text{SalesDom} + \text{SalesUS})/2 \ldots \text{(expression 3)}$$

$$\text{Output value} = \{[\text{SalesDom} - (\text{SalesDom} + \text{SalesUS})/2]^2 +$$

$$[\text{SalesUS} - (\text{SalesDom} + \text{SalesUS})/2]^2\}/2 \ldots \text{(expression 4)}$$

For example, in the process at S24, the input value generation unit 114 uses expressions that can exhaustively reflect the substance of the child items corresponding to the parent item specified by the process at S21 and can generate a number of input values equal to the number of the input nodes of the neural network like the expressions 1 to 4 above.

Consequently, the information processing apparatus 1 may generate a number of input values equal to the number of the input nodes of the neural network in such a form that the substance of instances and taxonomies included in the first document information 131a acquired by the process at S12 is exhaustively reflected without relying upon the substance of the instances or the taxonomies (for example, the number of items included in the instances or the hierarchical structure of each item) included in the first document information 131a acquired by the process at step S12.

Further, the input value generation unit 114 generates a learning filter for performing arithmetic operation, for example, in accordance with the following expression 5.

$$\text{Output value} = W11*\text{SalesDom} + W12*\text{SalesUS} \ldots \text{(expression 5)}$$

Here, the expression 5 above is an expression that uses, for example, values of two items from among the child items of "Sales." Therefore, for example, in the case where the number of child items of "Sales" is 3 or more, the input value generation unit 114 may perform pooling for the child items of "Sales."

For example, the input value generation unit 114 generates an output value (input value to the neural network) in the case where values of two child items that maximize the output value from among the child items of "Sales." For example, the input value generation unit 114 may generate an output value in the case where values corresponding to a combination that maximizes the output value from among combinations of two child items included in an adjacent relationship to the presentation linkbase described with reference to FIG. 6B.

Further, in this case, the input value generation unit 114 may generate, for example, an output value in the case where values of two child items from among the child items of "Sales" for each combination of two child items and further generate an average value of the generated output values. For example, the input value generation unit 114 may generate for each combination of two child items included in an adjacent relationship to the presentation linkbase described with reference to FIG. 6B, an output value in the case where values corresponding to each combination are used, and generate an average value of the generated output values.

Consequently, similarly as in the case of a fixed filter, the information processing apparatus 1 may generate an input value to the neural network without depending upon the substance (configuration) of instances or taxonomies included in the first document information 131a acquired by the process at S12.

Referring back to FIG. 15, the input value generation unit 114 generates filter information 136 on which the information relating to the filters generated by the process at S24 is reflected (S25). In the following, a particular example of the filter information 136 is described.

[Particular Example of Filter Information]

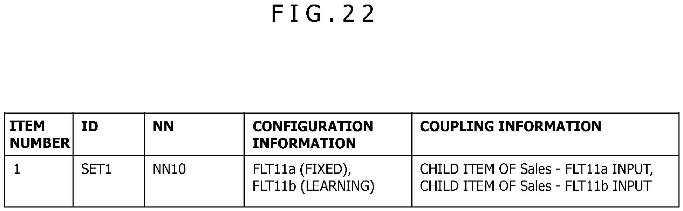

FIGs. 22, 25 and 30 are views illustrating particular examples of the filter information 136. The filter information 136 depicted in FIG. 22 and so forth includes "item number" for identifying each piece of information included in the filter information 136, "ID" for identifying a filter group that include filters to be applied to a same item, and "NN" for identifying a neural network. The filter information 136 depicted in FIG. 22 and so forth further includes "configuration information" to which information indicative of each filter is set, and "coupling information" to which information indicative of a coupling situation of each filter is set.

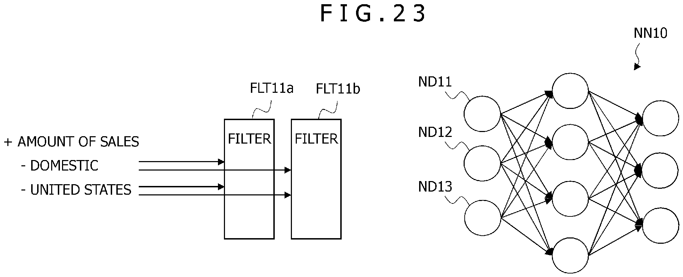

For example, in the filter information 136 depicted in FIG. 22, to information whose "item number" is "1," "SET1" for identifying a filter group including a filter FLT11a and another filter FLT11b is set as "ID," and "NN10" for identifying the a neural network NN10 to which the filter FLT11a and the filter FLT11b are coupled is set as depicted in FIG. 23.

Further, in the filter information 136 depicted in FIG. 22, to information whose "item number" is "1," "FLT11a (fixed)" indicating that the filter FLT11a that is a fixed filter is generated and "FLT11b (learning)" indicating that the filter FLT11b that is a learning filter is generated are set as "configuration information" as depicted in FIG. 23.

Furthermore, in the filter information 136 depicted in FIG. 22, to information whose "item number" is "1," "child item of Sales - FLT11a input" indicating that a child item of "Sales" and an input of the filter FLT11a are coupled to each other and "child item of Sales - FLT11b input" indicating that a child item of "Sales" and an input of the filter FLT11b are coupled to each other are set as "configuration information" as depicted in FIG. 23.

Consequently, when the information processing apparatus 1 generates an input value to the neural network, it may suppress inputting of values associated with items having no relationship to each other (child items corresponding to a same parent item) to a same filter. Therefore, it becomes possible for the information processing apparatus 1 to input an appropriate value to the neural network and perform construction of a neural network effective to perform information analysis.

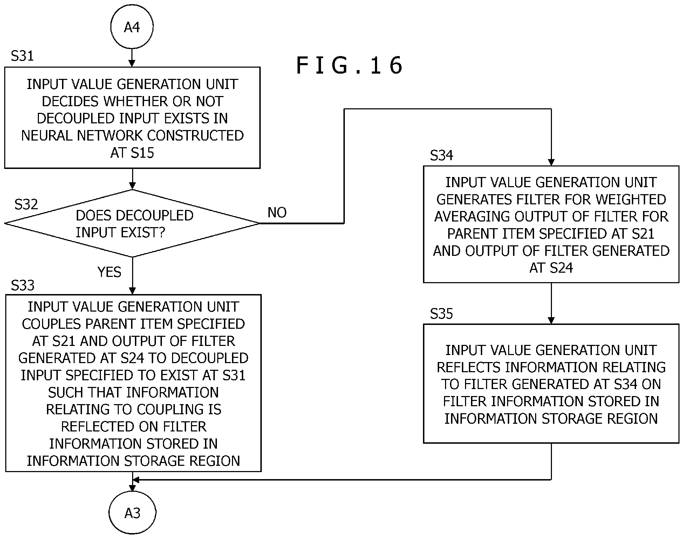

Referring back to FIG. 16, the input value generation unit 114 decides whether or not there exists an input node that is in a decoupled state to the neural network constructed by the process at S15 (S31).

As a result, in the case where it is decided that a decoupled input node exists (YES at S32), the input value generation unit 114 couples the parent item specified by the process at S21 and the output of the filter generated by the process at S24 to the decoupled input node decided to exist by the process at S31. Then, the input value generation unit 114 reflects the information relating to the coupling upon the filter information 136 stored in the information storage region 130 (S33). Thereafter, the input value generation unit 114 performs the processes at the steps beginning with step S21 again.

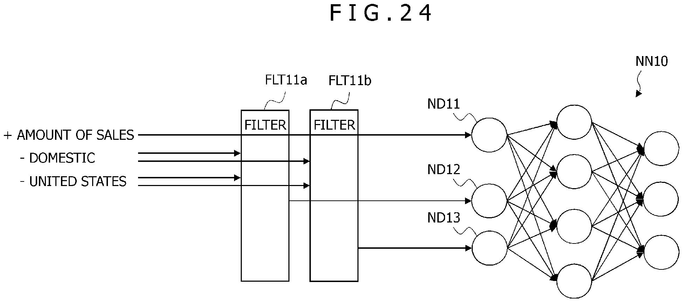

For example, input nodes ND11, ND12 and ND13 in the neural network NN10 depicted in FIG. 23 are all decoupled input nodes. Therefore, in this case, the input value generation unit 114 couples, for example, "Sales (amount of sales)" that is the parent item specified by the process at S21 and the input node ND11 of the neural network NN10 as depicted in FIG. 24 to each other. Further, the input value generation unit 114 couples, for example, the filter FLT11a and the filter FLT11b generated by the process at S24 and the input node ND12 and the input node ND13 of the neural network NN10 to each other, respectively.

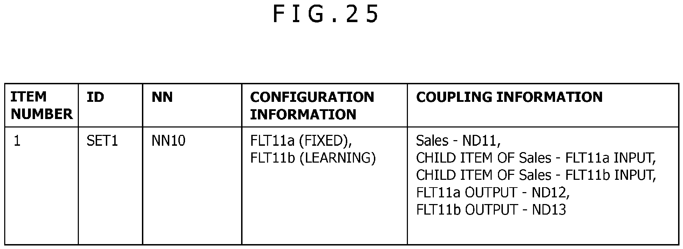

Then, in this case, the input value generation unit 114 sets (adds) "Sales - ND11" indicating that "Sales" and the input node ND11 are coupled to each other to "coupling information" of the information whose "ID" is "SET1" (information whose "item number" is "1") as depicted in FIG. 25. Then, the input value generation unit 114 sets (adds), to "coupling information" of the information whose "ID" is "SET1," "FLT11a output - ND12" indicating that the output of the filter FLT11a and the input node ND12 are coupled to each other and "FLT11b output - ND13" indicating that the output of the filter FLT11b and the input node ND13 are coupled to each other.

It is to be noted that, in the case of the number of decoupled input nodes decided to exist by the process at S31 is smaller than the number of parent items specified by the process at S21 and outputs of the filters generated by the process at S24, the input value generation unit 114 may couple part of the parent items specified by the process at S21 and the outputs of the filters generated by the process at S24 to the input nodes.

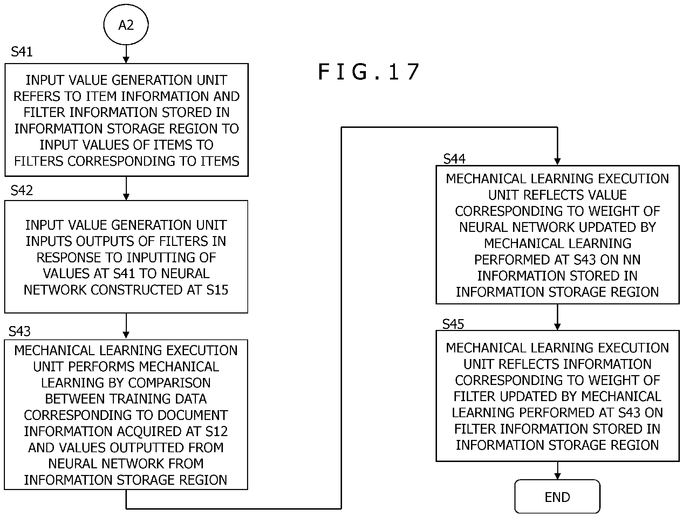

On the other hand, in the case where it is decided by the process at S22 that a parent item is not specified by the process at S21 (NO at S22), the input value generation unit 114 refers to the item information 134 and the filter information 136 stored in the information storage region 130 and inputs values of the items to the filters corresponding to the items (S41) as depicted in FIG. 17.

Then, the input value generation unit 114 inputs the outputs of the filters in response to inputting of a value by the process at S41 to the neural network constructed by the process at S15 (S42).

Then, the machine learning execution unit 115 of the information processing apparatus 1 performs machine learning by comparing the training data corresponding to the first document information 131a acquired by the process at S12 from among training data (not depicted) stored in the information storage region 130 and the values outputted from the neural network from the information storage region 130 with each other (S43). For example, the machine learning execution unit 115 may compare the training data (hereinafter referred to also as teacher data) corresponding to a value outputted from the neural network from among the training data corresponding to the first document information 131a acquired by the process at step S12 and a value actually outputted from the neural network with each other to perform machine learning by an error back propagation method.

It is to be noted that the machine learning execution unit 115 may perform, for example, machine learning by comparison between the value inputted to the neural network by the process at S41 and the value actually outputted from the neural network (namely, machine learning that does not use teacher data).

Thereafter, the machine learning execution unit 115 reflects the value corresponding to the weight of the neural network updated by the machine learning performed by the process at S43 on the NN information 132 stored in the information storage region 130 (S44). Further, the machine learning execution unit 115 reflects information corresponding to the weight of the filter updated by the machine learning performed by the process at S43 on the filter information 136 stored in the information storage region 130 (S45). Then, the information processing apparatus 1 ends the information generation process.

For example, the machine learning execution unit 115 performs updating of the information corresponding to the weight of the neural network from within the information set in "configuration information" of the NN information 132 described with reference to FIG. 20. Further, the machine learning execution unit 115 performs, for example, updating of the information corresponding to the weight of the filter from within the information set in "configuration information" of the filter information 136 described with reference to FIG. 22.

[Process Where Input Value Is Generated from Second Document Information]

Now, the information generation process in the case where an input value to the neural network is generated from information included in the second document information 131b described with reference to FIG. 3 and so forth is described. It is to be noted that the following description is given assuming that an information generation process in the case where an input value to the neural network is generated from information included in the first document information 131a is performed already.

The information acceptance unit 111 waits till an information generation timing as indicated in FIG. 14 (NO at S11).

In the case where an information generation timing comes (YES at S11), the information acceptance unit 111 acquires the second document information 131b stored in the information storage region 130 (S12).

Then, the information acceptance unit 111 generates second item information 134b and second taxonomy information 135b from the second document information 131b acquired by the process at S12 (S13). Then, the information acceptance unit 111 stores the generated second item information 134b and second taxonomy information 135b into the information storage region 130. In the following, a particular example of the second item information 134b and the second taxonomy information 135b is described.

[Particular Example of Second Item Information]

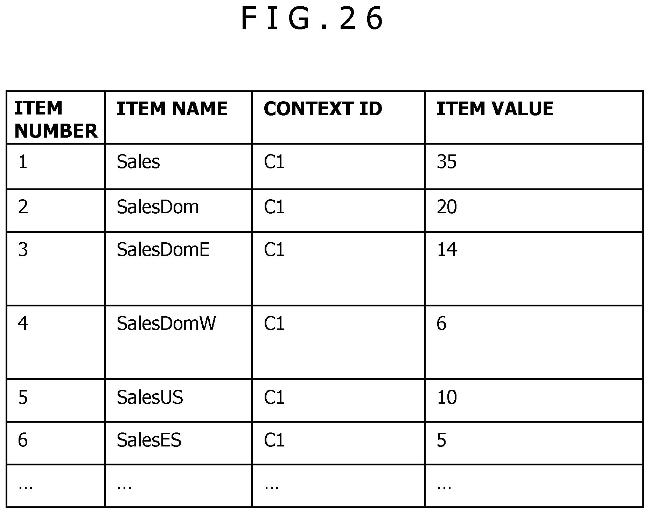

First, a particular example of the second item information 134b is described. FIG. 26 is a view illustrating a particular example of the second item information 134b.

The second item information 134b depicted in FIG. 26 includes "item number" for identifying each piece of information included in the second item information 134b, "item name" to which an item name is set, "context ID" to which a context ID corresponding to a context to be referred to by an item having an item name set to "item name" is set, and "item value" to which an item value corresponding to an item having an item name set to "item name" is set.

For example, the instance described with reference to FIG. 5 includes information indicating that the item value of "Sales" that is an item that refers to a context whose context ID is "C1" is "35." Therefore, the information acceptance unit 111 sets "Sales" as "item name" of the information whose "item number" is "1," sets "C1" as "context ID" and sets "35" as "item value" as depicted in FIG. 26. Description of the other information included in FIG. 26 is omitted.

[Particular Example of Second Taxonomy Information]

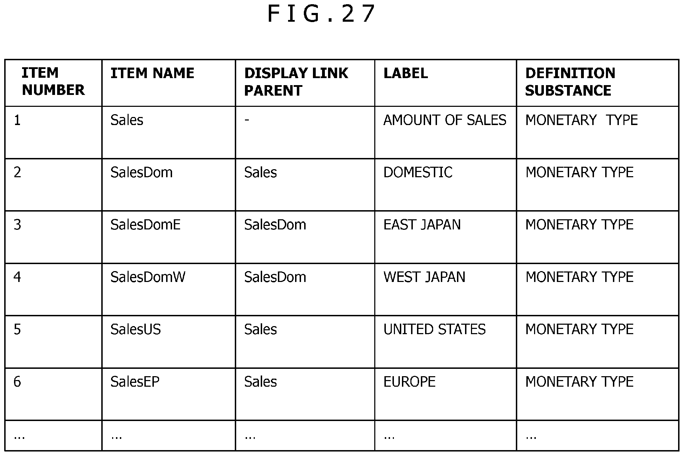

Now, a particular example of the second taxonomy information 135b is described. FIG. 27 is a view illustrating a particular example of the second taxonomy information 135b.

The second taxonomy information 135b depicted in FIG. 27 includes "item number" for identifying each piece of information included in the second taxonomy information 135b and "item name" to which an item name is set. The second taxonomy information 135b depicted in FIG. 27 further includes "presentation link parent" to which an item name corresponding to a parent item of an item having an item name set to "item name" from within information included in the presentation linkbase is set and "label" to which a label of an item having the item name set to "item name" is set from within information included in the label linkbase. Furthermore, the second taxonomy information 135b depicted in FIG. 27 includes "definition substance" to which the definition substance of the item having the item name set to "item name" from within information included in the schema. It is to be noted that, in the case where a different linkbase (for example, a calculation linkbase, a reference linkbase or the like) is included in a taxonomy constituting the second document information 131b, the information acceptance unit 111 may include information included in the different linkbase into the second taxonomy information 135b.

For example, the schema described with reference to FIG. 7A includes information that defines "Sales" as an item of the monetary type, and the label linkbase described with reference to FIG. 7C includes information indicating that the label corresponding to "Sales" is "amount of sales." Therefore, the information acceptance unit 111 sets "Sales" as "item name" of the information whose "item number" is "1," sets "amount of sales" as "label" and sets "monetary type" as "definition substance" as depicted in FIG. 27. Then, the information acceptance unit 111 sets "-" indicating that information is not set as "presentation link parent" of the information whose "item number" is "1" as depicted in FIG. 27.

Meanwhile, the schema described with reference to FIG. 7A includes information that defines "SalesDomE" as an item of the monetary type; the presentation linkbase described with reference FIG. 7B includes information indicating that "SalesDom" is a parent item of "SalesDomE"; and the label linkbase described with reference to FIG. 7C includes information indicating that the label corresponding to "SalesDomE" is "East Japan." Therefore, the information acceptance unit 111 sets "SalesDomE" as "item name" of the information whose "item number" is "3"; sets "SalesDom" as "presentation link parent"; sets "East Japan" as "label"; and sets "monetary type" as "definition substance" as depicted in FIG. 27. Description of the other information included in FIG. 27 is omitted.

Referring back to FIG. 13, the NN construction unit 112 decides that a neural network of an arbitrary structure is constructed already (YES at S14).

Then, the grouping unit 113 refers to the second item information 134b and the second taxonomy information 135b stored in the information storage region 130 and specifies one parent item in order beginning with an item having a higher hierarchy in the hierarchical structure (S21).

For example, in the second taxonomy information 135b described with reference to FIG. 27, "Sales" is set in "presentation link parent" of information whose "item name" is "SalesDom" (information whose "item number" is "2"). Further, in the second taxonomy information 135b described with reference to FIG. 27, "Sales" is set in "presentation link parent" of information whose "item name" is "SalesUS" (information whose "item number" is "5"). Furthermore, in the second taxonomy information 135b described with reference to FIG. 27, "Sales" is set in "presentation link parent" of information whose "item name" is "SalesEP" (information whose "item number" is "6"). Therefore, the grouping unit 113 specifies, as the parent item, "Sales" from within the information set in "item name" of the second item information 134b described with reference to FIG. 26 by the process at S21.

Thereafter, the grouping unit 113 decides that a parent item is specified by the process at S21 (YES at S22).

Then, in the example depicted in FIG. 24, "Sales (amount of sales)" and the neural network NN10 are coupled to each other. Therefore, for example, in the case where the parent item specified by the process at S21 is "Sales," the grouping unit 113 decides that the parent item specified by the process at S21 is coupled to the neural network constructed by the process at S15 (NO at S23). Accordingly, the input value generation unit 114 performs the processes at the steps beginning with step S21 again.

For example, in the second taxonomy information 135b described with reference to FIG. 27, "SalesDom" is set in "presentation link parent" of the information whose "item name" is "SalesDomE" (information whose "item number" is "3"). Further, in the second taxonomy information 135b described with reference to FIG. 27, "SalesDom" is set in "presentation link parent" of the information whose "item name" is "SalesDomW" (information whose "item number" is "4"). Therefore, in the process at S21, the grouping unit 113 specifies, as the parent item, "SalesDom" from within the information set in "item name" of the second item information 134b described with reference to FIG. 26.

Thereafter, the grouping unit 113 decides that a parent item is specified by the process at S21 (YES at S22).

In the example depicted in FIG. 24, "SalesDomE (East Japan)" and "SalesDomW (West Japan)" are not coupled to the neural network NN10. For example, in the case where the parent item specified by the process at S21 is "SalesDom," the grouping unit 113 decides that the parent item specified by the process at S21 is not coupled to the neural network NN10 constructed by the process at S15 (YES at S23). Therefore, the input value generation unit 114 performs the processes at the steps beginning with step S21 again.

Then, the input value generation unit 114 refers to the setting information 133 stored in the information storage region 130 and generates filters for child items of the item specified by the process at S21 (S24).

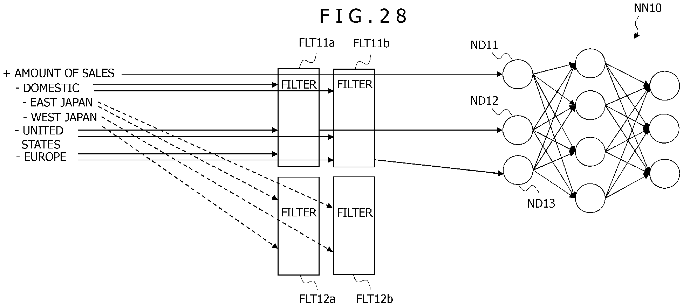

For example, in the case where the parent item specified by the process at S21 is "SalesDom," the input value generation unit 114 generates a fixed filter and a learning filter (filter FLT12a and filter FLT12b) for "SalesDomE (East Japan)" and "SalesDomW (West Japan)," respectively, that are child items of "SalesDom (domestic)" as depicted in FIG. 28.

Thereafter, the input value generation unit 114 generates filter information 136 on which information relating to the filters generated by the process at S24 is reflected (S25).

Then, the input value generation unit 114 decides whether or not a decoupled input node exists in the neural network constructed by the process at S15 (S31).

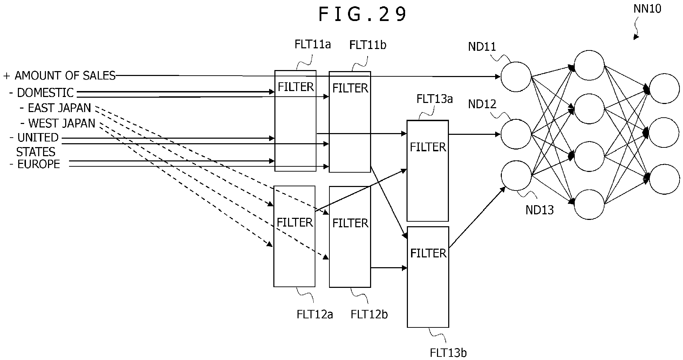

For example, all of the input nodes ND11, ND12 and ND13 in the neural network NN10 depicted in FIG. 29 are coupled input nodes (NO at S32). Therefore, the input value generation unit 114 performs processes at the steps beginning with step S34.

Then, the input value generation unit 114 generates filters (hereinafter referred to also as weighted averaging filters) for weighted averaging outputs of the filters of the parent item specified by the process at S21 and outputs of the filters generated by the process at S24, and inserts the weighted averaging filters between the filters for the parent item specified by the process at S21 and the neural network (S34).

For example, the input value generation unit 114 generates a filter FLT13a for weighted averaging an output of the filter FLT11a of the parent item specified by the process at S21 and an output of the filter FLT12a generated by the process at S24 as depicted in FIG. 29. Further, the input value generation unit 114 generates a filter FLT13b for weighted averaging, for example, an output of the filter FLT11b of the parent item specified by the process at S21 and an output of the filter FLT12b generated by the process at S24.

Furthermore, the input value generation unit 114 reflects the information relating to the filters generated at S34 on the filter information 136 stored in the information storage region 130 (S35). Thereafter, the input value generation unit 114 performs the processes at the steps beginning with S21 again.

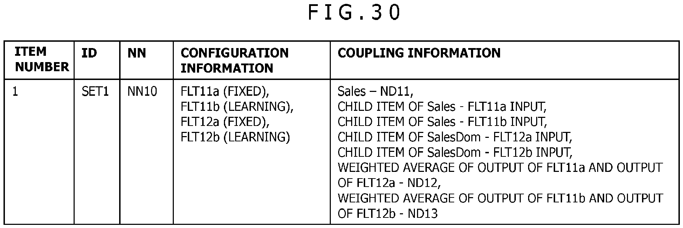

For example, the input value generation unit 114 sets "FLT12a (fixed)" and "FLT12b (learning)" indicative of the filter FLT12a that is a fixed filter and the filter FLT12b that is a learning filter to "configuration information" of the information whose "ID" is "SET1" (information whose "item number" is "1") as depicted in FIG. 30. Further, the input value generation unit 114 sets, for example, "child item of SalesDom - FLT12a input" indicating that a child item of "SalesDom" and an input of the filter FLT12a are coupled to each other is set to "coupling information" of the information whose "ID" is "SET1." Furthermore, for example, "weighted average of FLT11a output and FLT12a output - ND12" indicating that the filter FLT13a for weighted averaging an output of the filter FLT11a and an output of the filter FLT12a and the input node ND12 are coupled to each other is set to "coupling information" of the information whose "ID" is "SET1." Description of the other information included in FIG. 30 is omitted. In the following, a particular example of an expression used for each weighted averaging filter is described.

[Particular Example (2) of Expression Used for Filter]

The input value generation unit 114 generates a weighted averaging filter for performing arithmetic operation, for example, in accordance with an expression 6 given below. The following description is given assuming that the parent item specified by the process at S21 is "SalesDom."

$$\text{Output value} = \text{output of filter FLT11a} * (\text{number of child items of}$$
$$\text{SalesDom} - 1)/\text{number of child items of SalesDom} + \text{output of filter FLT12a} *$$
$$1/\text{number of child items of SalesDom} \dots \text{(expression 6)}$$

Consequently, even in the case where the number of filters generated by the process at S24 becomes greater than the number of input nodes to the neural network, the information processing apparatus 1 may generate a number of input values equal to the number of the input nodes to the neural network while exhaustively utilizing all filters generated by the process at S24. Therefore, the information processing apparatus 1 may generate a number of input values equal to the number of input nodes to the neural network without depending upon the number of filters generated by the process at S24 (number of parent items specified by the process at S21).

According to the disclosed embodiment, it is made possible to construct a neural network that may output information having high significance.

## Claims

1. A computer-readable storage medium having stored therein a generation program for causing a computer to execute a process comprising:

   classifying, when a document is accepted, each of a plurality of items included in the accepted document into one of a plurality of groups by referring to a storage in which information indicative of a relationship between the plurality of items included in the document is stored; and
   generating, for each of the plurality of groups, input values to a neural network based on a value or values individually associated with one or more items classified in the group.

2. The storage medium according to claim 1, wherein the classifying includes
   classifying one or more items included in a same hierarchical structure into a same group.

3. The storage medium according to claim 2, wherein
   the generating includes
   referring to a storage unit that stores the plurality of groups and one or more inputs to the neural network individually in an associated relationship with each other and another storage unit that stores one or more filters to be used for generation of input values individually to the one or more inputs such that, for each of the plurality of groups, generation of the input values with respect to the one or more inputs corresponding to the group is performed from values associated with one or more child items corresponding, from among one or more items included in the hierarchical structure corresponding to the group, to a same parent item and specific filters to be used for values associated with the one or more child items from among the one or more filters corresponding to the group.

**4.** The storage medium according to claim 3, wherein
the generating further includes
generating as the input values a result of product sum operation of one or more values individually associated with a given number of items from among the one or more child items and one or more weights included in the specific filters.

**5.** The storage medium according to claim 4, wherein
the given number of items are a plurality of items included adjacent each other in the hierarchical structure.

**6.** The storage medium according to claim 4, wherein
the generating further includes
specifying, where the number of the one or more child items is greater than the given number, a plurality of combinations of the given number of items different from each other from the one or more child items,
calculating, for each of the plurality of specified combinations of the given number of items, results of product sum operation of one or more values associated individually with the given number of items included in the combination and the one or more weights, and
performing generation of the input values from the calculated results.

**7.** The storage medium according to claim 6, wherein
the generating further includes
generating a maximum value of the results of the calculation or an average value of the results of the calculation as the input value.

**8.** The storage medium according to claim 3, wherein
the generating further includes
performing, where a plurality of the parent items exist for one or more items included in the hierarchical structure corresponding to each group, generation of the input values for each of the plurality of parent items, and
performing weighted averaging for each of the generated input values.

**9.** The storage medium according to claim 3, wherein the process further comprising:

updating one or more weights included in the one or more filters by performing machine learning with training data including the generated input values and given output values.

**10.** The storage medium according to claim 3, wherein
the generating includes
calculating a sum total of one or more values individually associated with a given number of items from among the one or more child items, and
performing generation of input values to the one or more inputs corresponding to each group based on the calculated sum total.

**11.** An information processing apparatus comprising:

a classifying unit configured to classify, when a document is accepted, each of a plurality of items included in the accepted document into one of a plurality of groups by referring to a storage in which information indicative of a relationship between the plurality of items included in the document is stored; and
a generating unit configured to generate, for each of the plurality of groups, input values to a neural network based on a value or values individually associated with one or more items classified in the group.

**12.** The information processing apparatus according to claim 11, wherein the generating unit performs
referring to a storage unit that stores the plurality of groups and one or more inputs to the neural network individually in an associated relationship with each other and another storage unit that stores one or more filters to be used for generation of input values individually to the one or more inputs such that, for each of the plurality of groups, generation of the input values with respect to the one or more inputs corresponding to the group is performed from values associated with one or more child items corresponding, from among one or more items included in the hierarchical structure corresponding to the group, to a same parent item and specific filters to be used for values associated with the one or more child items from among the one or more filters corresponding to the group.

**13.** A generation method performed in a computer, the method comprising:

classifying, when a document is accepted, each of a plurality of items included in the accepted document into one of a plurality of groups by referring to a storage in which information indicative of a relationship between the plurality of items included in the document is stored; and

generating, for each of the plurality of groups, input values to a neural network based on a value or values individually associated with one or more items classified in the group.

14. The generation method according to claim 13, wherein the generating includes

referring to a storage unit that stores the plurality of groups and one or more inputs to the neural network individually in an associated relationship with each other and another storage unit that stores one or more filters to be used for generation of input values individually to the one or more inputs such that, for each of the plurality of groups, generation of the input values with respect to the one or more inputs corresponding to the group is performed from values associated with one or more child items corresponding, from among one or more items included in the hierarchical structure corresponding to the group, to a same parent item and specific filters to be used for values associated with the one or more child items from among the one or more filters corresponding to the group.

F I G . 1

10

3

OPERATION
TERMINAL

NETWORK NW

1

INFORMATION
PROCESSING
APPARATUS

130

STORAGE
UNIT

131

DOCUMENT
INFORMATION

# F I G . 2

```
[DOCUMENT STRUCTURE]
+ instance2016.xbrl                   : INSTANCE
   + schema2016.xsd                   : SCHEMA
      - presentation2016.xml          : PRESENTATION LINKBASE
      - definition2016.xml            : DEFINITION LINKBASE
      - label2016.xml                 : LABEL LINKBASE
...
```

# F I G . 3

```
[DOCUMENT STRUCTURE]
+ instance2017.xbrl                 : INSTANCE
    + schema2017.xsd                : SCHEMA
        - presentation2017.xml      : PRESENTATION LINKBASE
        - definition2017.xml        : DEFINITION LINKBASE
        - label2017.xml             : LABEL LINKBASE
...
```

# F I G . 4

```
[instance2016.xbrl]
(ITEM)
- Sales              : 200      (CONTEXT: C1)
- SalesDom           : 150      (CONTEXT: C1)
- SalesUS            : 50       (CONTEXT: C1)
...
```

# F I G . 5

```
[instance2017.xbrl]
(ITEM)
- Sales              : 35        (CONTEXT: C1)
- SalesDom           : 20        (CONTEXT: C1)
- SalesDomE          : 14        (CONTEXT: C1)
- SalesDomW          : 6         (CONTEXT: C1)
- SalesUS            : 10        (CONTEXT: C1)
- SalesEU            : 5         (CONTEXT: C1)
...
```

FIG.6A

```
[schema2016.xsd]
- Sales           : MONETARY TYPE
- SalesDom        : MONETARY TYPE
- SalesUS         : MONETARY TYPE
- Cost            : MONETARY TYPE
...
```

FIG.6C

```
[label2016.xml]
- Sales           : AMOUNT OF SALES
- SalesDom        : DOMESTIC
- SalesUS         : UNITED STATES
- Cost            : COST OF SALES
...
```

FIG.6B

```
[presentation2016.xml]
+ Sales
   - SalesDom
   - SalesUS
 + Cost
...
```

# FIG.7A

```
[schema2017.xsd]
- Sales        : MONETARY TYPE
- SalesDom     : MONETARY TYPE
- SalesDomE    : MONETARY TYPE
- SalesComW    : MONETARY TYPE
- SalesUS      : MONETARY TYPE
- SalesEU      : MONETARY TYPE
- Cost         : MONETARY TYPE
...
```

# FIG.7C

```
[label2017.xml]
- Sales        : AMOUNT OF SALES
- SalesDom     : DOMESTIC
- SalesDomE    : EAST JAPAN
- SalesComW    : WEST JAPAN
- SalesUS      : UNITED STATES
- SalesEU      : EUROPE
- Cost         : COST OF SALES
...
```

# FIG.7B

```
[presentation2017.xml]
+ Sales
   - SalesDom
      - SalesDomE
      - SalesDomW
   - SalesUS
   - SalesEU
 + Cost
...
```

# F I G . 8

1

INFORMATION
PROCESSING
APPARATUS

101

CPU

102

MEMORY

PROGRAM 110

106

104

STORAGE MEDIUM

INFORMATION
STORAGE REGION
130

105

DISPLAY
APPARATUS

103

I/O UNIT

3

OPERATION
TERMINAL

# F I G . 9

1　INFORMATION PROCESSING APPARATUS

111
| INFORMATION ACCEPTANCE UNIT |

114
| INPUT VALUE GENERATION UNIT |

112
| NN CONSTRUCTION UNIT |

115
| MECHANICAL LEARNING EXECUTION UNIT |

113
| GROUPING UNIT |

131
DOCUMENT
INFORMATION

132
NN
INFORMATION

133
SETTING
INFORMATION

134
ITEM
INFORMATION

135
TAXONOMY
INFORMATION

136
FILTER
INFORMATION

# FIG.10

INFORMATION GENERATION PROCESS

S1 IS DOCUMENT ACCEPTED?

NO

YES

S2
INFORMATION PROCESSING APPARATUS REFERS TO STORAGE UNIT, IN WHICH INFORMATION INDICATIVE OF RELATIONSHIP BETWEEN PLURAL ITEMS INCLUDED IN DOCUMENT IS STORED, TO CLASSIFY EACH OF PLURAL ITEMS INCLUDED IN DOCUMENT ACCEPTED AT S1 INTO ONE OF PLURAL GROUPS

S3
INFORMATION PROCESSING APPARATUS EXECUTES PROCESS FOR GENERATING, FOR EACH OF PLURAL GROUPS, INPUT VALUE TO NEURAL NETWORK FROM VALUES INDIVIDUALLY ASSOCIATED WITH ONE OR MORE ITEMS CLASSIFIED INTO EACH GROUP AT S2

END

# F I G . 1 1

3

OPERATION
TERMINAL

NETWORK NW

1

INFORMATION
PROCESSING
APPARATUS

CLASSIFY PLURAL
ITEMS INCLUDED
IN DOCUMENT
(S2)

130

STORAGE
UNIT

131

DOCUMENT
INFORMATION

REFER TO
INFORMATION
INDICATIVE OF
RELATIONSHIP
BETWEEN PLURAL
ITEMS INCLUDED IN
DOCUMENT (S2)

F I G . 1 2

GENERATE INPUT VALUE
FROM ASSOCIATED
VALUE OF CLASSIFIED
ITEM (S3)

3

OPERATION
TERMINAL

NETWORK NW

1

INFORMATION
PROCESSING
APPARATUS

130

STORAGE
UNIT

131

DOCUMENT
INFORMATION

FIG.13

LB

FLT1a

FLT1b

+ CURRENT ASSETS
  - CASH AND DEPOSITS
  - NOTES RECEIVABLE-TRADE
  - ACCOUNTS
    RECEIVABLE-TRADE
  - SHORT-TERM LOANS
    RECEIVABLE
  - MERCHANDISES
+ NONCURRENT ASSETS
  + PROPERTY, PLANT AND
    EQUIPMENT
    - BUILDINGS AND
      STRUCTURES
    - MACHINERY AND
      EQUIPMENT
    - VEHICLES
    - LAND
    - CONSTRUCTION
      IN PROGRESS
+ INTANGIBLE ASSETS
  - SOFTWARE
  - GOODWILL
  - PATENT RIGHT
  - RIGHT OF TRADEMARK

FILTER
FILTER
FILTER FLT2
FILTER FLT3

ND1
ND2
ND3
ND4

NN1

FIG.14

INFORMATION GENERATION PROCESS

S11

INFORMATION GENERATION TIMING? — NO

YES

S12

INFORMATION ACCEPTANCE UNIT ACQUIRES DOCUMENT INFORMATION STORED IN INFORMATION STORAGE REGION

S13

INFORMATION ACCEPTANCE UNIT GENERATES ITEM INFORMATION AND TAXONOMY INFORMATION FROM DOCUMENT INFORMATION ACQUIRED AT S12

S14

IS NEURAL NETWORK CONSTRUCTED ALREADY? — YES

NO

S15

NN CONSTRUCTION UNIT CONSTRUCTS NEURAL NETWORK OF ARBITRARY STRUCTURE

S16

NN CONSTRUCTION UNIT GENERATES NN INFORMATION INDICATIVE OF STRUCTURE OF NEURAL NETWORK CONSTRUCTED AT S15

A1

FIG.15

(A1)

(A3)

S21
GROUPING UNIT REFERS TO ITEM
INFORMATION AND TAXONOMY
INFORMATION STORED IN INFORMATION
STORAGE REGION TO SPECIFY ONE
PARENT ITEM IN ORDER BEGINNING
WITH ITEM IN HIGHER HIERARCHY IN
HIERARCHICAL STRUCTURE

S22
IS PARENT ITEM
SPECIFIED? — NO → (A2)

YES

S23
IS PARENT ITEM IN
DECOUPLED STATE? — NO → (A3)

YES

S24
INPUT VALUE GENERATION UNIT
REFERS TO SETTING INFORMATION
STORED IN INFORMATION STORAGE
REGION TO GENERATE FILTER FOR
CHILD ITEM OF ITEM SPECIFIED AT
S21

S25
INPUT VALUE GENERATION UNIT
GENERATES FILTER INFORMATION
ON WHICH INFORMATION RELATING
TO FILTER GENERATED AT S24 IS
REFLECTED

(A4)

A4

**FIG.16**

S31

INPUT VALUE GENERATION UNIT
DECIDES WHETHER OR NOT
DECOUPLED INPUT EXISTS IN
NEURAL NETWORK CONSTRUCTED
AT S15

S32 DOES DECOUPLED
INPUT EXIST?

NO

YES

S33

INPUT VALUE GENERATION UNIT
COUPLES PARENT ITEM SPECIFIED
AT S21 AND OUTPUT OF FILTER
GENERATED AT S24 TO DECOUPLED
INPUT SPECIFIED TO EXIST AT S31
SUCH THAT INFORMATION
RELATING TO COUPLING IS
REFLECTED ON FILTER
INFORMATION STORED IN
INFORMATION STORAGE REGION

S34

INPUT VALUE GENERATION UNIT
GENERATES FILTER FOR WEIGHTED
AVERAGING OUTPUT OF FILTER FOR
PARENT ITEM SPECIFIED AT S21
AND OUTPUT OF FILTER GENERATED
AT S24

S35

INPUT VALUE GENERATION UNIT
REFLECTS INFORMATION RELATING
TO FILTER GENERATED AT S34 ON
FILTER INFORMATION STORED IN
INFORMATION STORAGE REGION

A3

# F I G . 1 7

A2

**S41**

INPUT VALUE GENERATION UNIT REFERS TO ITEM INFORMATION AND FILTER INFORMATION STORED IN INFORMATION STORAGE REGION TO INPUT VALUES OF ITEMS TO FILTERS CORRESPONDING TO ITEMS

**S42**

INPUT VALUE GENERATION UNIT INPUTS OUTPUTS OF FILTERS IN RESPONSE TO INPUTTING OF VALUES AT S41 TO NEURAL NETWORK CONSTRUCTED AT S15

**S43**

MECHANICAL LEARNING EXECUTION UNIT PERFORMS MECHANICAL LEARNING BY COMPARISON BETWEEN TRAINING DATA CORRESPONDING TO DOCUMENT INFORMATION ACQUIRED AT S12 AND VALUES OUTPUTTED FROM NEURAL NETWORK FROM INFORMATION STORAGE REGION

**S44**

MECHANICAL LEARNING EXECUTION UNIT REFLECTS VALUE CORRESPONDING TO WEIGHT OF NEURAL NETWORK UPDATED BY MECHANICAL LEARNING PERFORMED AT S43 ON NN INFORMATION STORED IN INFORMATION STORAGE REGION

**S45**

MECHANICAL LEARNING EXECUTION UNIT REFLECTS INFORMATION CORRESPONDING TO WEIGHT OF FILTER UPDATED BY MECHANICAL LEARNING PERFORMED AT S43 ON FILTER INFORMATION STORED IN INFORMATION STORAGE REGION

END

# F I G . 1 8

| ITEM NUMBER | ITEM NAME | CONTEXT ID | ITEM VALUE |
|---|---|---|---|
| 1 | Sales | C1 | 200 |
| 2 | SalesDom | C1 | 150 |
| 3 | SalesUS | C1 | 50 |
| ... | ... | ... | ... |

# F I G . 1 9

| ITEM NUMBER | ITEM NAME | DISPLAY LINK PARENT | LABEL | DEFINITION SUBSTANCE |
|---|---|---|---|---|
| 1 | Sales | - | AMOUNT OF SALES | MONETARY TYPE |
| 2 | SalesDom | Sales | DOMESTIC | MONETARY TYPE |
| 3 | SalesUS | Sales | UNITED STATES | MONETARY TYPE |
| … | … | … | … | … |

# F I G . 2 0

| ITEM NUMBER | ID | BASE TAXONOMY | CONFIGURATION INFORMATION |
|---|---|---|---|
| 1 | NN10 | TAXONOMY A01 | INPUT NODE (3), INTERMEDIATE NODE (4), OUTPUT NODE (3), WEIGHT··· |

# F I G . 2 1

| ITEM NUMBER | NAME | VALUE |
|---|---|---|
| 1 | GENERATION FILTER | FIXED FILTER (1), LEARNING FILTER (1) |
| ... | ... | ... |

F I G . 2 2

| ITEM NUMBER | ID | NN | CONFIGURATION INFORMATION | COUPLING INFORMATION |
|---|---|---|---|---|
| 1 | SET1 | NN10 | FLT11a (FIXED), FLT11b (LEARNING) | CHILD ITEM OF Sales - FLT11a INPUT, CHILD ITEM OF Sales - FLT11b INPUT |

# F I G . 2 3

NN10

FLT11a  FLT11b

+ AMOUNT OF SALES

  - DOMESTIC

  - UNITED STATES

FILTER  FILTER

ND11

ND12

ND13

# F I G . 2 4

F I G . 2 5

| ITEM NUMBER | ID | NN | CONFIGURATION INFORMATION | COUPLING INFORMATION |
|---|---|---|---|---|
| 1 | SET1 | NN10 | FLT11a (FIXED), FLT11b (LEARNING) | Sales - ND11, CHILD ITEM OF Sales - FLT11a INPUT, CHILD ITEM OF Sales - FLT11b INPUT, FLT11a OUTPUT - ND12, FLT11b OUTPUT - ND13 |

# F I G . 2 6

| ITEM NUMBER | ITEM NAME | CONTEXT ID | ITEM VALUE |
|---|---|---|---|
| 1 | Sales | C1 | 35 |
| 2 | SalesDom | C1 | 20 |
| 3 | SalesDomE | C1 | 14 |
| 4 | SalesDomW | C1 | 6 |
| 5 | SalesUS | C1 | 10 |
| 6 | SalesES | C1 | 5 |
| ... | ... | ... | ... |

# F I G . 2 7

| ITEM NUMBER | ITEM NAME | DISPLAY LINK PARENT | LABEL | DEFINITION SUBSTANCE |
|---|---|---|---|---|
| 1 | Sales | - | AMOUNT OF SALES | MONETARY  TYPE |
| 2 | SalesDom | Sales | DOMESTIC | MONETARY TYPE |
| 3 | SalesDomE | SalesDom | EAST JAPAN | MONETARY TYPE |
| 4 | SalesDomW | SalesDom | WEST JAPAN | MONETARY TYPE |
| 5 | SalesUS | Sales | UNITED STATES | MONETARY TYPE |
| 6 | SalesEP | Sales | EUROPE | MONETARY TYPE |
| ... | ... | ... | ... | ... |

FIG.28

FIG.29

F I G . 3 0

| ITEM NUMBER | ID | NN | CONFIGURATION INFORMATION | COUPLING INFORMATION |
|---|---|---|---|---|
| 1 | SET1 | NN10 | FLT11a (FIXED), FLT11b (LEARNING), FLT12a (FIXED), FLT12b (LEARNING) | Sales – ND11, CHILD ITEM OF Sales - FLT11a INPUT, CHILD ITEM OF Sales - FLT11b INPUT, CHILD ITEM OF SalesDom - FLT12a INPUT, CHILD ITEM OF SalesDom - FLT12b INPUT, WEIGHTED AVERAGE OF OUTPUT OF FLT11a AND OUTPUT OF FLT12a - ND12, WEIGHTED AVERAGE OF OUTPUT OF FLT11b AND OUTPUT OF FLT12b - ND13 |

Europäisches
Patentamt

European
Patent Office

Office européen
des brevets

# EUROPEAN SEARCH REPORT

Application Number

EP 18 20 8257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/086185 A1 (ADJAOUTE AKLI [US]) 24 March 2016 (2016-03-24) * the whole document * | 1-14 | INV. G06Q40/02 G06Q40/00 |
| X | US 2012/226590 A1 (LOVE ROBIN S [US] ET AL) 6 September 2012 (2012-09-06) * the whole document * | 1-14 | |
| X | CN 102 508 860 A (GUANGZHOU CH CONTROL TECHNOLOGY CO LTD) 20 June 2012 (2012-06-20) * the whole document * | 1-14 | |
| X | US 2015/254556 A1 (GETSON HOWARD M [US] ET AL) 10 September 2015 (2015-09-10) * paragraph [0021] - paragraph [0023] * | 1-14 | |
| X | WO 2004/100043 A1 (GE FINANCIAL ASSURANCE HOLDING [US]; BONISSONE PIERO PATRONE [US]; SUB) 18 November 2004 (2004-11-18) * page 74 - page 75 * * page 57 * | 1-14 | TECHNICAL FIELDS SEARCHED (IPC) G06Q |
| X | US 2003/084014 A1 (SOHRABI MOHAAN [CH] ET AL) 1 May 2003 (2003-05-01) * figure 14b * | 1-14 | |
| X | WO 01/13295 A1 (HNC SOFTWARE INC [US]) 22 February 2001 (2001-02-22) * page 71 - page 72 * | 1-14 | |

The present search report has been drawn up for all claims

| Place of search | Date of completion of the search | Examiner |
|---|---|---|
| The Hague | 27 March 2019 | van der Weiden, Ad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 8257

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2019

| Patent document cited in search report | | | Publication date | Patent family member(s) | | | Publication date |
|---|---|---|---|---|---|---|---|
| US 2016086185 | A1 | | 24-03-2016 | NONE | | | |
| US 2012226590 | A1 | | 06-09-2012 | CA | 2828751 | A1 | 07-09-2012 |
| | | | | US | 2012226590 | A1 | 06-09-2012 |
| | | | | US | 2014222631 | A1 | 07-08-2014 |
| | | | | WO | 2012119008 | A2 | 07-09-2012 |
| CN 102508860 | A | | 20-06-2012 | NONE | | | |
| US 2015254556 | A1 | | 10-09-2015 | CN | 106462794 | A | 22-02-2017 |
| | | | | CN | 106462795 | A | 22-02-2017 |
| | | | | SG | 11201607309T | A | 28-10-2016 |
| | | | | SG | 11201607320T | A | 28-10-2016 |
| | | | | US | 2015254556 | A1 | 10-09-2015 |
| | | | | US | 2015254765 | A1 | 10-09-2015 |
| | | | | WO | 2015134991 | A1 | 11-09-2015 |
| | | | | WO | 2015134992 | A2 | 11-09-2015 |
| WO 2004100043 | A1 | | 18-11-2004 | US | 2004236611 | A1 | 25-11-2004 |
| | | | | WO | 2004100043 | A1 | 18-11-2004 |
| US 2003084014 | A1 | | 01-05-2003 | NONE | | | |
| WO 0113295 | A1 | | 22-02-2001 | AU | 6621100 | A | 13-03-2001 |
| | | | | US | 7813944 | B1 | 12-10-2010 |
| | | | | WO | 0113295 | A1 | 22-02-2001 |

For more details about this annex : see Official Journal of the European Patent Office, No. 12/82

**REFERENCES CITED IN THE DESCRIPTION**

**Patent documents cited in the description**

- JP 2007164591 A
- JP 2010170287 A
- JP 2017084340 A